## Europäisches Patentamt

## European Patent Office

## Office européen des brevets

(19)

(11) Veröffentlichungsnummer: **0 087 454
B1**

(12) **EUROPÄISCHE PATENTSCHRIFT**

(45) Veröffentlichungstag der Patentschrift:
**23.10.85**

(21) Anmeldenummer: **82902722.6**

(22) Anmeldetag: **01.09.82**

(86) Internationale Anmeldenummer:
**PCT/EP 82/00189**

(87) Internationale Veröffentlichungsnummer:
**WO 83/00872 (17.03.83** Gazette 83/7)

(51) Int. Cl.⁴: **C 08 L 63/00,** C 09 D 5/44,
C 08 G 59/56, C 08 G 59/62

(54) **BINDEMITTEL AUF DER GRUNDLAGE VON MISCHKONDENSATEN AUS EPOXYDHARZEN UND RESOLEN SOWIE AMINEN, VERFAHREN ZU DESSEN HERSTELLUNG UND ZUR ELEKTROPHORETISCHEN ABSCHEIDUNG SOWIE DIE VERWENDUNG DESSELBEN IN EINEM ELEKTROPHORESEBAD.**

(30) Priorität: **04.09.81 DE 3135010**

(43) Veröffentlichungstag der Anmeldung:
**07.09.83 Patentblatt 83/36**

(45) Bekanntmachung des Hinweises auf die Patenterteilung:
**23.10.85 Patentblatt 85/43**

(84) Benannte Vertragsstaaten:
**AT CH DE FR GB LI NL SE**

(56) Entgegenhaltungen:
**DE - A - 2 320 301
DE - A - 2 711 385**

(73) Patentinhaber: **HOECHST AKTIENGESELLSCHAFT,
Postfach 80 03 20, D-6230 Frankfurt am Main 80 (DE)**

(72) Erfinder: **HESSE, Wolfgang, Rossbachhöhe 42,
D-6204 Taunusstein (DE)**
Erfinder: **RITZ, Jürgen, Am Hipperich 68, D-6500 Mainz
(DE)**
Erfinder: **ZIMMERMANN, Rolf, Pfahlerstrasse 35,
D-6200 Wiesbaden (DE)**

EP 0 087 454 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Für die Herstellung von kathodisch abscheidbaren Lackbindemitteln werden aminfunktionelle Kunstharze mit Säuren versetzt. Dadurch werden sie wasserlöslich und durch Gleichstrom abscheidbar. Es ist bekannt, als aminfunktionelle Komponente Addukte von Polyisocyanaten an eine Kombination von Polyhydroxylverbindungen und Aminen mit Resolen zu präkondensieren (DE-A-3 005 735, DE-A-2 755 538). Aus mehreren Gründen, die die Giftigkeit, den hohen Preis und die Verseifungsanfälligkeit dieser Harze bzw. deren Rohstoffe betreffen, wird in der Literatur vorgeschlagen, statt der Isocyanat-Polyhydroxyl-Harze Aminadukte von Epoxyharzen gemeinsam mit Resolen zu verwenden (DE-A-2 737 375, US-A-3 729 435, DE-A-2 620 612, US-A-4 172 062, US-A-3 896 017, US-A-3 963 663, US-A-4 036 800), wobei die Epoxydharz-Komponente zusätzlich mit Isocyanaten modifiziert werden kann. In einem Teil dieser Druckschriften wird aber darauf hingewiesen, daß eine Präkondensation des Resols mit der aminhaltigen Komponente zwar möglich, aber möglichst zu vermeiden ist, und daß es ferner vorteilhaft wäre, auf Phenolharze überhaupt zu verzichten (DE-A-2 620 612, S. 11, Absatz 1). Der Grund zu dieser Warnung wird nicht aufgeführt, liegt aber auf der Hand:

Die in den angezogenen Schriften beschriebenen Phenolharze vernetzen nur langsam und spalten beim Vernetzen Formaldehyd sowie Phenol ab. Um diese Härtung nicht nochmals zu erschweren, wird geraten, falls überhaupt Phenolharze eingesetzt werden sollen, auf eine zu starke Verätherung der Methylolgruppen zu verzichten und diese auf etwa 30% zu begrenzen. Für eine gute Verträglichkeit mit den anderen Lackkomponenten wäre aber eine höhere Verätherung notwendig.

Bei der kataphoretischen Lackierung werden die abgeschiedenen Lackfilme vor dem Einbrennen mit Wasser abgespült. Dabei gelangen nichtumgesetztes Phenol bzw. niedrigmolekulare Harzanteile in das Spülwasser und verursachen Abwasser-Probleme, was einen weiteren, gravierenden Nachteil der genannten Verfahren bedeutet. Die katalytische Verbrennung dieser Abwässer wird dadurch erschwert, daß die phenolischen Anteile an der Katalysatoroberfläche oxidativ vernetzen und den Verbrennungskatalysator unwirksam machen.

Das gleiche Problem tritt bei der Entgiftung der bei der Härtung entstehenden Abgase ein. Die phenolhaltige Abluft macht den Katalysator unwirksam. Durch die DE-B- 2 320 301, DE-B-2 357 075, DE-A-2 419 179, DE-A-2 711 385, DE-A-2 755 908 und DE-A-2 828 728 ist ferner bekannt, aus Phenolen, Aldehyden, primären und/oder sekundären Aminen Mannichbasen herzustellen und diese mit Epoxyd-Verbindungen umzusetzen. Diesem Verfahren ist ein sehr hoher Amingehalt der Endprodukte eigentümlich. Mannichbasen neigen zur Hydrolyse. Das führt zu starken Veränderungen beim Lagern und bei der Anwendung der wäßrigen Harzlösungen. Außerdem ist der Vernetzungsvorgang mit einer Abspaltung von Amin und Formaldehyd verbunden. Es entstehen erhebliche Geruchsbelästigungen. Dieses Übel soll nach DE-A-2 711 385 durch Verwendung spezieller Amine gemildert werden. Eine vollständige Vermeidung der Geruchsbelästigung ist aber dadurch nicht möglich.

Es wurde nun überraschend gefunden, daß man die geschilderten Nachteile vermeidet und Bindemittel für die kataphoretische Lackierung erhält, die rasch vernetzen, weder freies Phenol noch freien Formaldehyd enthalten und diese Stoffe bei der Verarbeitung nicht oder höchstens in Spuren abscheiden und die darüber hinaus hervorragende Eigenschaften in bezug auf Elastizität, Pigmentbenetzung, elektrische Eigenschaften, Umgriff, Korrosionsbeständigkeit und Verarbeitbarkeit aufweisen, wenn man Mischkondensate aus Epoxydharzen und Resolen mit Aminen, die wenigstens eine primäre oder sekundäre Aminogruppe und höchstens 2 Hydroxylgruppen enthalten, vor, während oder nach der Mischkondensation umsetzt und gegebenenfalls nach der Zugabe von Säuren in Wasser löst, wenn man als Resol die Methylolverbindungen von Oligomethylenphenolen (im folgenden auch als Oligophenole bezeichnet) verwendet, wobei diese vorzugsweise zusätzlich durch Kohlenwasserstoffreste aliphatischer und/oder aromatischer Natur oder Hydroxyalkyl- bzw. Hydroxyaralkyl-Reste substituiert sind, wobei der Begriff aliphatisch auch cycloaliphatische Gruppen einschließt.

Gegenstand der Erfindung ist demgemäß ein Bindemittel auf der Grundlage von Mischkondensatoren aus Epoxydharzen und Resolen sowie Aminen, bei den das Epoxydharz teilweise entfunktionalisiert ist und durchschnittlich noch 0,5–1,3 Epoxydgruppen pro Moleküleinheit enthält, die Resolkomponente aus Methylolverbindungen von Oligomethylenphenolen besteht, die zusätzlich durch Kohlenwasserstoff- oder Hydroxyalkyl- bzw. -aralkylreste substituiert sein können und bei dem das Amin wenigstens eine primäre oder sekundäre Aminogruppe und höchstens 2 Hydroxylgruppen enthält. Gegenstand der Erfindung ist auch ein Verfahren zu seiner Herstellung bei dem ein Epoxydharz mit einem Resol und vor, während oder nach dieser Mischkondensation mit mindestens einem Amin, das wenigstens eine primäre oder sekundäre Aminogruppe und höchstens 2 Hydroxylgruppen enthält, umgesetzt und anschließend gegebenenfalls mit Wasser und Säure in eine wäßrig-kolloide Form umgewandelt wird. Ein weiterer Gegenstand der Erfindung ist ein Verfahren zur elektrophoretischen Abscheidung eines kationischen Harzes auf ein als Kathode geschaltetes Werkstück, wobei die Abscheidung aus einem wäßrig-kolloiden System des Bindemittels durchgeführt wird.

Gegenstand der Erfindung ist schließlich auch die Verwendung des Bindemittels in einem wäßrigen Elektrophoresebad.

Als entfunktionalisierte Epoxydharze können z. B. solche mit einem Molekulargewicht von 500 bis 5000, vorzugsweise von 800 bis 3000 auf Basis von Diphenylolpropan und/oder Diphenylolmethan und Epihalogenhydrinen verwendet werden. Zum Entfunktionalisieren dienen insbesondere Monocarbonsäuren, einwertige Phenole und/oder Monoepoxydverbindungen, so daß die Harze pro Moleküleinheit noch durchschnittlich 0,5 bis 1,3, vorzugsweise 0,8 bis 1,1 Epoxydgruppen enthalten. Solche teilweise entfunktionalisierten Epoxydharze können dadurch hergestellt werden, daß bifunktionelle Epoxydharze während ihrer Herstellung oder nachträglich mit den genannten entfunktionalisierenden Komponenten umgesetzt werden. Besonders vorteilhaft ist es aber, zur Herstellung der entfunktionalisierten Epoxyharze von den technischen Diglycidyläthern des Diphenylolpropans und/oder Diphenylolmethans auszugehen und diese mit difunktionellen Phenolen wie Diphenylolpropan und/oder Diphenylolmethan und/oder Dicarbonsäuren mit 4 bis 10 C-Atomen, z. B. den weiter unten genannten, in Gegenwart der entfunktionalisierenden Reaktionspartner umzusetzen. Auf diese Weise wird die Verteilung der Epoxydgruppen gleichmäßiger. Alle diese Umsetzungen können in der Schmelze oder in Lösung bei Temperaturen von 60—300, vorzugsweise von 80—180° C und vorzugsweise in Gegenwart von Katalysatoren erfolgen. Die Mitverwendung von Katalysatoren empfiehlt sich besonders, wenn die Reaktion bei niedrigen Temperaturen durchgeführt werden soll. Als Dicarbonsäuren eignen sich z. B. Malein-, Fumar-, Phthal-, Isophthal-, Bernstein-, Adipin-, Kork- oder Sebacinsäure.

Als Monocarbonsäuren werden im allgemeinen Carbonsäuren mit 1—24, vorzugsweise 7—20 C-Atomen synthetischer oder natürlicher Herkunft verwendet. Beispielsweise genannt werden Benzoesäure, Isooctansäure, Isononansäure, verzweigte Fettsäuren, in denen der Alkylrest in $\alpha$-Stellung verzweigt ist und 7 bis 15, vorzugsweise 8 bis 10 C-Atome hat (Versatic-Säuren) und die gesättigten oder ungesättigten, aus natürlichen fetten Ölen stammenden Säuren wie Sojasäure, Leinölfettsäure, Ricinolsäure, Ricinensäure, sowie Tallölfettsäure oder Kolophonium.

Als Phenole können z. B. verwendet werden Phenol, die verschiedenen Kresole und Xylenole, durch KW-Gruppen substituierte Phenole wie Alkylphenole mit 2 bis 20, vorzugsweise 4—16 C-Atomen im Alkylrest. Es können auch Alkylenphenole verwendet werden. Besonders geeignet sind Phenol selbst, tert.-Butylphenol, Phenylphenol, Cyclohexylphenol, Isooctylphenol, Isononylphenol, Dodecylphenol oder Cashewöl, wobei die Substituenten jeweils auch die Isomeren umfassen und sich vorzugsweise in p-Stellung befinden.

Als Monoepoxyde seien z. B. Äthylen-, Propylen-, Butylen- und Styroloxyd, Glycid und seine Derivate, wie die Ester von Monocarbonsäuren, z. B. der Acryl- und Methacrylsäure, Versaticsäure und die Monoäther von Alkoholen und Phenolen, z. B. Phenylglycidyläther genannt.

Als Katalysatoren eignen sich z. B. Amine und Phosphine, besonders die tertiären Alkyl- und Arylverbindungen. Sie werden im allgemeinen in Mengen von 0,005 bis 0,1 Gew.-% zugegeben. Besonders geeignete Katalysatoren sind neben Triphenylphosphin solche tert.-Amine, die unter Reaktionsbedingungen nicht flüchtig sind.

Baut man die entfunktionalisierten Epoxydharze aus den Diglycidyläthern des Diphenylolpropans bzw. Diphenylolmethans und difunktionellen Phenolen und/oder Dicarbonsäuren auf, kann man eine weitere Modifikation vornehmen, indem man unter den vorgenannten Bedingungen zusätzlich noch Monoglycidylverbindungen, z. B. Phenylglycidäther, Glycid, Äthylenoxyd, Propylenoxyd, Styroloxyd oder Glycidester von Carbonsäuren, z. B. den Glycidester der Versaticsäure verwendet.

Für die Herstellung der erfindungsgemäßen Präkondensate geeignete Phenolharze sind Methylolverbindungen von Oligomethylenphenolen. Bevorzugt ist die Phenolkomponente mit Alkyl- (einschließlich Cycloalkyl), Alkenyl-, Aryl-, Aralkyl- oder Hydroxyalkyl- oder Hydroxyaralkylgruppen substituiert. Die hydroxylgruppenfreien Substituenten befinden sich am Kern und die Hydroxyalkyl- bzw. Aralkylgruppen an der phenolischen Hydroxylgruppe. Der Substitutionsgrad aller Substituenten soll insgesamt 5—100, vorzugsweise 10—90 Äquivalent%, bezogen auf phenolische Hydroxylgruppen betragen. Es ist auch möglich, solche Phenolkomponenten zu verwenden, die gleichzeitig am Kern und an der phenolischen Hydroxylgruppe substituiert sind. Die Substituenten können von vornherein vorhanden oder in üblicher Weise nachträglich eingeführt werden, insbesondere wenn von Phenol ($C_6H_5OH$) ausgegangen wird.

Die Resole werden zweckmäßig mehrstufig hergestellt. In der ersten Stufe wird das Phenol mit Formaldehyd zu einem Oligomethylenphenol kondensiert. Im allgemeinen liegt der Kondensationsgrad dieses Produkts im niedrigen bis mittleren Bereich, bedingt durch ein Ausgangsverhältnis zwischen Phenol und Formaldehyd von 1 : (0,1—0,7), vorzugsweise 1 : (0,2—0,65). Nach der Kondensation wird das nichtumgesetzte Phenol abdestilliert.

In einer bevorzugten Ausführungsform werden substituierte Oligophenole verwendet. Für deren Herstellung sind z. B. folgende Wege möglich: Das vorgebildete Oligophenol wird in Gegenwart eines Friedel-Crafts-Katalysators mit dem alkylierenden Reagenz umgesetzt. Dieser Weg ist besonders empfehlenswert, wenn das alkylierende Reagenz besonders leicht reagiert, wie das z. B. bei Vinylaromaten oder Terpenen der Fall ist. Die substituierten Oligophenole können aber auch durch Mischkondensation von Phenol, Formaldehyd und substituierten Phenolen hergestellt werden. Als substituierte Phenole werden z. B. die oben genannten Alkylphenole, vorzugsweise solche mit 4—12 C-Atomen, ferner mit Vinylaromaten, besonders mit Styrol, modifizierte Phenole genannt. Es können auch Alkenylphenole wie Allylphenol, Butenylphenol oder Isoprenylphenol verwendet werden. Aralkylreste mit 8 bis 10 C-Atomen sind als Substituenten der Phenole bevorzugt. Statt der substituierten Phenole können auch deren Methylolverbindungen, besonders deren Dimethylolverbindungen eingesetzt werden. Bei der Berechnung des obigen Ausgangsmolverhältnisses muß der als Methylolgruppe gebundene reaktive Formaldehyd mitberücksichtigt werden. Nach der Kondensation werden die Oligophenole durch Destillation von nichtumgesetzten Phenolen befreit.

Soll das Oligophenol an der phenolischen Hydroxylgruppe substituiert werden, kann die Reaktion in üblicher Weise durch Verätherung der phenolischen OH-Gruppen nach Williamson erfolgen. Als alkylierende Reagenzien wirken dabei in Gegenwart von Kondensationsmitteln wie Alkali Halogenhydrine wie Äthylenchlorhydrin, Propylenchlorhydrin und Chlorpropanol. Die Substitution zu hydroxyalkyl-haltigen Verbindungen kann aber auch durch eine basisch oder sauer katalysierte Reaktion des Oligophenols mit Monoepoxyden wie Äthylenoxid, Propylenoxyd, Styroloxyd, Glycid oder Phenylglycidyläther erfolgen.

Die Oligophenole werden anschließend in ihre Methylolverbindungen übergeführt. Das geschieht im allgemeinen durch basenkatalysierte Umsetzung mit Formaldehyd. Als Katalysatoren für diese Reaktion können beispielsweise Alkali- und Erdalkalihydroxyde bzw. -Oxyde verwendet werden. Es ist auch möglich, Salze — wie die des Zinks, Bleis, Calciums, Magnesiums oder Mangans — von organischen Säuren oder schwachen anorganischen Säuren wie Borsäure, Phosphorsäure zu verwenden. Bevorzugt ist aber die Verwendung des Alkalihydroxyds. Im allgemeinen wird der Katalysator dem geschmolzenen Oligophenol zugegeben, das Produkt auf 30—80, vorzugsweise 40—70° C abgekühlt und der Formaldehyd entweder als wäßriger Formaldehyd oder als Paraformaldehyd oder als Mischung beider zugegeben, wobei vor, während und/oder nach der Umsetzung mit Formaldehyd Wasser oder Lösemittel wie aromatische Kohlenwasserstoffe oder Alkohole zugegeben werden können. Durch diese Reaktionsführung wird eine nennenswerte Verätherung der Methylolgruppen verhindert.

Die Bildung des Präkondensates aus Epoxydharz und Resol kann vorteilhaft in der Schmelze oder in Lösung, gegebenenfalls mit Abtrennung des Kondensationswassers bei Temperaturen von 80—160° C, vorzugsweise von 100—130° C erfolgen. Die relativ hohen Reaktionstemperaturen werden durch die hohe Stabilität der am Oligophenol befindlichen Methylolgruppen ermöglicht. Die Präkondensation dauert im allgemeinen 0,5—10 Stunden und wird durch Messung des Schmelzpunkts und/oder der Viskosität kontrolliert. Während der Präkondensation tritt kein meßbarer Abbau der Epoxydgruppen ein. Das Gewichtsverhältnis zwischen Epoxydharz und Resol liegt im allgemeinen zwischen 20 : 80 und 80 : 20.

Die Addition des Amins an die Epoxydgruppen kann vor, während oder nach der Präkondensation erfolgen, zweckmäßig bei 20—140° C, vorzugsweise 50—120° C, vorteilhaft in Lösemitteln. Diese können je nach Wunsch im Reaktionsprodukt verbleiben oder vor oder nach der Zugabe des für die spätere Anwendung notwendigen Wassers teilweise oder vollständig entfernt werden, z. B. durch Destillation. Wenn die Präkondensate vor der Verdünnung mit Wasser in organischen Lösemitteln gelöst werden sollen, ist es zweckmäßig, gleich diese Lösemittel zu wählen. Geeignet sind z. B. Alkohole mit bis zu 6 C-Atomen, besonders die verschiedenen Butanole, Amylalkohole, Hexylalkohole usw., Ester wie Essigester, Butylacetat, Ketone wie Methyläthylketon, Dipropylketon, Cyclohexanon, Methylisobutylketon, Methylisoamylketon usw. Es können auch noch höhere Ketone, z. B. Isophoron, oder hydroxyl-gruppenhaltige Ketone, z. B. Diacetonalkohol oder 4-Hydroxybutanon-2 verwendet werden. Wenn als Aminkomponente primäre Amine verwendet oder mitverwendet werden, ist es vorteilhaft, teilweise oder vollständig in ketonischen Lösemitteln zu arbeiten.

Die Addition des Amins an die Epoxydgruppe ist gewöhnlich nach mehreren Stunden abgeschlossen, wenn Temperaturen von 60—120° C gewählt werden. Das Molverhältnis der Epoxydgruppen zu Aminen beträgt im allgemeinen 1 : 0,1 bis 1 : 1. Vorzugsweise werden 0,35 bis 0,9 Mol Amin für jede Epoxydgruppe eingesetzt. Geeignete Amine sind sekundäre oder primäre Amine, die als Substituenten Alkyl- und/oder Alkanolreste tragen, z. B. Äthyläthanolamin, Äthylisopropanolamin, Diäthanolamin, Dipropanolamin, deren niedrige Alkyläther, vorzugsweise Methyl- und/oder Äthyläther dieser Alkanolamine sowie Dialkylamine mit Alkylresten von ein bis drei C-Atomen, wie Dimethylamin, Diäthylamin, Dipropylamin. Als primäre Amine können z. B. eingesetzt werden: Äthanolamin, Propanolamin, Dihydroxypropylamin, Methylamin, Äthylamin oder Propylamin. Bevorzugt wird der Einsatz von primären und sekundären aliphatischen Aminen, die mehrere Aminfunktionen pro Molekül enthalten, wobei mindestens eine Aminfunktion eine primäre oder sekundäre sein muß. Brauchbar sind z. B. Diäthylentriamin oder Triäthylentetramin oder Dialkylaminoalkylamine wie Dimethylaminopropylamin. Die Amine können für sich allein oder in Mischung mit anderen verwendet werden. Schließlich ist es auch möglich, als Amin-Komponente Polyamidoamine, die bei der Umsetzung von Dicarbonsäuren mit Polyalkylenaminen entstehen, zu verwenden.

Die so erhaltenen aminhaltigen Präkondensate sind noch nicht mit Wasser verdünnbar, sie müssen vielmehr noch mit einer Säure protonisiert werden. Prinzipiell sind alle wasserverdünnbaren Säuren geeignet, bevorzugt ist aber die Verwendung von Carbonsäuren mit 1 bis 6 C-Atomen, wie Ameisensäure, Essigsäure, Propionsäure, Milchsäure, Glukonsäure, oder von Phosphorsäure. Diese Säuren können teilweise oder vollständig auch schon während der Adduktbildung zwischen Präkondensat und Amin zugegen sein. Das Äquivalentverhältnis zwischen Amingruppen und Säuren beträgt im allgemeinen von 1 : 0,2 bis 1 : 2, vorzugsweise 1 : 0,5 bis 1 : 1,5. Dabei ist aber zu berücksichtigen, daß bei Verwendung von Aminen mit stark unterschiedlicher Aminfunktionalität, z. B. bei der Verwendung von Diäthylentriamin oder Dimethylaminopropylamin durch den Einbau des Epoxydharzes ein Teil der Aminfunktionalität verloren geht, weil durch die Substitution des Stickstoffes mit dem Epoxydharz die Basizität stark zurückgedrängt wird, aber der nicht mit dem Epoxydharz reagierte Stickstoff seine ursprünglich starke Basizität beibehält.

Die mit Säure versetzten Präkondensate sind mit Wasser verdünnbar. Der sich dabei einstellende pH-Wert ist von der Art des verwendeten Amins, von dessen Menge und dem Neutralisationsgrad abhängig. Er liegt im allgemeinen zwischen 3,0 und 9,0. Bei Verwendung von Aminen wie Diäthylentriamin, Triäthylentetramin oder Dimethylaminopropylamin oder Polyaminoamiden liegt der pH-Wert meist bei Werten zwischen 6 und 9.

Wesentlich für die Beurteilung von kataphoretisch abscheidbaren Harzen ist der MEQ-Wert. Dieser drückt die m-Val Säure/100 g Festharz aus, die zur Überführung in eine wäßrige kolloide Lösung verwendet werden. Bei den erfindungsgemäßen Harzen liegt er gewöhnlich zwischen 10 und 80, vorzugsweise zwischen 15 und 45 MEQ.

Die erfindungsgemäßen Bindemittel können pigmentiert und/oder mit Füllstoffen versehen werden. Es ist aber auch möglich, Pigmentpasten mit dritten Substanzen, z. B. Harzen herzustellen und diese den Harzlösungen vor dem Gebrauch hinzuzufügen. Dabei müssen solche Harze selbst nicht wasserlöslich sein. Durch die stark solubilisierende Kraft der Präkondensate werden auch diese Harze in wäßrige Lösung übergeführt.

Zur Einstellung bestimmter Effekte, auch zur weiteren Senkung des MEQ-Wertes, ist es möglich, den Harzen wasserlösliche und nichtwasserlösliche künstliche oder natürliche Harze oder übliche Weichmacher hinzuzufügen; z. B. können Epoxydharze, besonders niedrigmolekulare Epoxydharze, deren Ester mit Fettsäuren, Alkydharze, Melaminharze oder Weichmacher wie Triphenylphosphat, Dialkylphthalate oder Alkohole mit 8 bis 20 C-Atomen, im allgemeinen in Mengen von 2—40, vorzugsweise von 5—30% verwendet werden, bezogen auf das Gewicht des Harzbindemittels.

Die Hauptanwendung der erfindungsgemäßen Harze liegt auf dem Gebiet der kataphoretischen Lackierung. Für die thermische Härtung werden, je nach Art des eingebauten Amines und des zur Neutralisation verwendeten Anions im allgemeinen Temperaturen von 110—400°, vorzugsweise von 140—380°C benötigt. Die dazu gehörigen Zeiten liegen zwischen 60 Min. und wenigen Sekunden. Bei der Vernetzung werden Schadstoffe nicht oder höchstens in Spuren abgespalten. Phenol tritt dabei nicht auf. Beim Abspülen der kataphoretisch lackierten Bleche enthält das Spülwasser kein freies Phenol.

Die beanspruchten Harze können aber auch durch andere Verfahren, z. B. durch Walzen, Spritzlackieren — welches gegebenenfalls nach der sogenannten Airless-Methode durchgeführt werden kann — auf die zu schützenden Gegenstände aufgebracht werden. Das kann in Form der wasserverdünnten Lösungen, aber auch in organischen Lösemitteln erfolgen. Außer für lacktechnische Zwecke lassen sich die erfindungsgemäßen Präkondensate auch für verschiedene andere Zwecke, z. B. als Haftvermittler für anorganische Materialien wie Glasfasern, Asbest und dergleichen, als Faserschlichten, Imprägnier- und Bindemittel für Schleifkörner zur Herstellung von Schleifmitteln auf flexiblen Unterlagen oder von Schleifkörpern oder dergleichen verwenden.

In den nachstehenden Beispielen bedeutet T = Gewichtsteile und % = Gewichtsprozent. Die Viskosität der Harze wurde, wenn nicht anders angegeben, jeweils in 50%iger Lösung in Äthylenglykolmonoäthyläther bei 20°C ermittelt. Schmelzpunkte wurden nach der Kapillar-Methode bestimmt.

Beispiel

a) Herstellung des Resols

In einem mit Thermometer, Rührer, Rückflußkühler, absteigendem Kühler und einer Einrichtung zur Einstellung von vermindertem Druck versehenen Reaktionsgefäß wurden 700 T Phenol, 4 T Maleinsäurenanhydrid sowie 322 T 30%ige wäßrige Formaldehydlösung 3 h am Rückfluß gekocht. Dann verminderte man den Druck und destillierte die flüchtigen Anteile ab, bis die Sumpftemperatur 220°C betrug. Im Reaktionsgefäß verblieben 499 T eines Oligophenols mit einer Viskosität von 290 mPa · s/20°C. Der Gehalt an freiem Phenol lag unter 0,01%. 336 T des erhaltenen Oligophenols wurden geschmolzen und mit 1 T konzentrierter Schwefelsäure versetzt. Zu der auf 80°C gehaltenen Schmelze gab man 172 T Styrol, ließ die Temperatur auf 120°C ansteigen und hielt diese Temperatur noch eine Stunde. Danach gab man 184 T 33%iger Natronlauge und 149 T Wasser zu, kühlte auf 60°C ab und versetzte mit 188 T einer 37%igen wäßrigen Formaldehydlösung. Nach 3,5 Stunden war kein freier Formaldehyd mehr nachweisbar. Dann verdünnte man die Schmelze mit 367 T Isobutanol und 41 T Xylol und neutralisierte mit 161 T 50%iger Schwefelsäure. Nach Abtrennen der wäßrigen Phase entwässerte man durch Umlaufdestillation unter vermindertem Druck und erhielt 960 T einer 60%igen Harzlösung mit einer Viskosität von 1150 mPa · s/20°C (60%ig).

### b) Herstellung des Epoxydharzes

In einer Apparatur wie unter a) genannt wurden 167,2 T Epoxydharz mit einem Epoxydäquivalentgewicht von 190 auf Basis von Bisphenol A und Epichlorhydrin, 54,6 T Bisphenol A, 18,8 T Phenol geschmolzen und bei 100°C 0,08 T Dimethylaminopropylamin zugegeben. Dann erwärmte man auf 140°C und hielt diese Temperatur 6 Stunden. In quantitativer Ausbeute fielen 240 T eines Epoxydharzes mit einer Epoxydzahl 1,3, einem Schmelzpunkt von 61°C und einer Viskosität von 430 mPa · s/20°C an.

### c) Herstellung des Präkondensates aus Epoxydharz und Resol

Zu der im Reaktionsgefäß befindlichen Epoxydharzschmelze wurden 226,6 T der unter a) hergestellten 60%igen Resollösung gegeben. Dabei kühlte sich die Mischung auf 100°C ab. Man verminderte den Druck und entfernte das Lösemittel. Dabei erhöhte sich die Temperatur auf 118°C. Man hielt $2^1/_2$ Stunden bei 118°C; der Schmelzpunkt des Präkondensates betrug dann 55°C und die Epoxydzahl 0,78. Nun gab man 226 T Cyclohexanon zu und brachte den Inhalt des Reaktionsgefäßes auf 80°C.

### d) Herstellung des Aminadduktes

Zu der 80°C warmen Lösung ließ man 20,3 T Dimethylaminopropylamin laufen und hielt diese Temperatur 3 h. Die Viskosität der Lösung betrug bei einem Rückstand von 60% (1 h bei 170°C) 9500 mPa · s/20°C. Dann versetzte man die Lösung mit 26,8 T einer 50%igen Milchsäurelösung.

### e) Herstellung der wäßrigen Lösung

In einem offenen Verdünnungsgefäß wurden 800 T entionisiertes Wasser unter Rühren zu 200 T der unter d) erhaltenen Harzlösung gegeben. Es bildete sich eine wäßrig-kolloide Lösung mit einem Harzgehalt von 12%. Der pH-Wert der Lösung betrug 7,2.

### f) Kataphoretische Abscheidung

In eine Kataphorese-Zelle wurden als Anode ein entfettetes Stahlblech und als Kathode ein phosphatiertes Stahlblech gebracht. Die kataphoretische Beschichtung wurde bei einer Spannung von 220 Volt durchgeführt und dauerte 1,5 min. Während dieser Zeit sank die Stromstärke von zunächst 3 A auf 50 mA. Das als Kathode geschaltete Blech wurde aus der Zelle genommen und mit Wasser abgespült. Im Spülwasser war kein Phenol nachweisbar. Nach Trocknen des Bleches mit einem Luftstrahl wurde der Lack bei 170°C 20 Min. in einem Umlufttrockenschrank eingebrannt. Es bildete sich ein harter, glänzender, zähelastischer Überzug mit einer Schichtdicke von 24 μm auf beiden Seiten. Der eingebrannte Lackfilm war gegen organische Lösungsmittel beständig und widerstand dem Acetontest.

**Patentansprüche**

1. Bindemittel auf der Grundlage von Mischkondensaten aus Epoxydharzen und Resolen sowie Aminen, dadurch gekennzeichnet, daß das Epoxydharz teilweise entfunktionalisiert ist und durchschnittlich noch 0,5–1,3 Epoxydgruppen pro Moleküleinheit enthält, die Resolkomponente aus Methylolverbindungen von Oligomethylenphenolen besteht, die zusätzlich durch Kohlenwasserstoff oder Hydroxyalkyl- bzw. -aralkylreste substituiert sein können und daß das Amin wenigstens eine primäre oder sekundäre Aminogruppe und höchstens 2 Hydroxylgruppen enthält.

2. Bindemittel nach Anspruch 1, dadurch gekennzeichnet, daß das Epoxydharz ein Molekulargewicht von 500–5000, vorzugsweise 800–3000 hat, mittels Monocarbonsäuren, einwertigen Phenolen und/oder Monoepoxydverbindungen entfunktionalisiert ist, sich von Diphenylolpropan und/oder Diphenylolmethan und Epihalogenhydrinen ableitet und im allgemeinen noch 0,8–1,1 Epoxydgruppen pro Moleküleinheit enthält.

3. Bindemittel nach Anspruch 1 oder 2, dadurch gekennzeichnet, daß das entfunktionalisierte Epoxydharz noch zusätzlich durch Umsetzung mit difunktionellen Phenolen und/oder Dicarbonsäuren mit 4 bis 10 C-Atomen — vorzugsweise bei 80–180°C und in Gegenwart von Katalysatoren — modifiziert ist.

4. Bindemittel nach einem oder mehreren der Ansprüche 1 bis 3, dadurch gekennzeichnet, daß das Gewichtsverhältnis zwischen Epoxydharz und Resol zwischen 20 : 80 und 80 : 20 liegt.

5. Bindemittel nach einem oder mehreren der Ansprüche 1 bis 4, dadurch gekennzeichnet, daß der Substitutionsgrad aller Substituenten der Resolkomponente 5 bis 100, vorzugsweise 10 bis 90 Äquivalent-% beträgt und Kohlenwasserstoff-Substituenten aus Alkylresten mit 4 bis 16 C-Atomen und/oder Aralkylresten mit 8 bis 10 C-Atomen bestehen und sich vorzugsweise in Parastellung befinden.

6. Bindemittel nach einem oder mehreren der Ansprüche 1 bis 5, dadurch gekennzeichnet, daß das Amin mehrere Aminfunktionen im Molekül enthält, und das Amin in einer solchen Menge verwendet ist, daß das Molverhältnis der Epoxydgruppen zu Aminen 1 : 0,1 bis 1 : 1, vorzugsweise 1 : (0,35—0,9) beträgt.

7. Bindemittel nach einem oder mehreren der Ansprüche 1 bis 6, dadurch gekennzeichnet, daß es in wäßriger und durch Säure protonisierter Form vorliegt, wobei das Äquivalentverhältnis zwischen Amingruppen und Säuren im allgemeinen 1 : (0,2 bis 2), vorzugsweise 1 : (0,5—1,5) beträgt.

8. Bindemittel nach einem oder mehreren der Ansprüche 1 bis 7, dadurch gekennzeichnet, daß es zusätzlich noch andere übliche Stoffe wie Pigmente und Füllstoffe sowie vorzugsweise 2 bis 40 Gew.-% Harze und/oder Weichmacher enthält und daß der MEQ-Wert zwischen 10 und 80, vorzugsweise zwischen 15 und 45 liegt.

9. Verfahren zur Herstellung eines Bindemittels nach einem oder mehreren der Ansprüche 1 bis 8, dadurch gekennzeichnet, daß ein Epoxydharz mit einem Resol und vor, während oder nach dieser Mischkondensation mit mindestens einem Amin, das wenigstens eine primäre oder sekundäre Aminogruppe und höchstens 2 Hydroxylgruppen enthält, umgesetzt und anschließend gegebenenfalls mit Wasser und Säure in eine wäßrig-kolloide Form umgewandelt wird.

10. Verfahren nach Anspruch 9, dadurch gekennzeichnet, daß die Umsetzung des Epoxydharzes mit dem Resol bei 80 bis 160°C, vorzugsweise 100 bis 130°C erfolgt und das Amin bei 20—140°C, vorzugsweise 50 bis 120°C addiert wird, wobei vorzugsweise das Resol mehrstufig in der Weise hergestellt wird, daß zunächst ein Oligophenol unter Verwendung von Phenol durch Umsetzung mit Formaldehyd im Ausgangsverhältnis 1 : (0,1—0,7), vorzugsweise 1 : 1 (0,2—0,65) hergestellt wird, nicht umgesetzte Phenole abdestilliert werden und die Oligophenole dann auf übliche Weise in die Methylolverbindungen übergeführt werden.

11. Verfahren zur elektrophoretischen Abscheidung eines kationischen Harzes aus einer wäßrigen Dispersion auf ein als Kathode geschaltetes Werkstück, dadurch gekennzeichnet, daß man die Abscheidung aus einem wäßrig-kolloiden System eines Bindemittels nach einem oder mehreren der Ansprüche 1 bis 8 durchführt.

12. Verwendung des Bindemittels nach einem oder mehreren der Ansprüche 1 bis 8, in einem wäßrigen Elektrophoresebad nach dem Verfahren nach Anspruch 11, wobei der pH-Wert im allgemeinen zwischen 3 und 9, vorzugsweise zwischen 6 und 9 liegt.

## Claims

1. A binder based on co-condensates of epoxy resins and resols with amines, characterized in that the epoxy resin is partially defunctionalized and still contains, on average, 0.5—1.3 epoxide groups per molecular unit, the resol ccmponent is composed of methylol compounds of oligomethylene-phenols, which can additionally be substituted by hydrocarbon or hydroxyalkyl or hydroxyalkyl radicals and that the amine contains at least one primary or secondary amino group and at most 2 hydroxyl groups.

2. A binder as claimed in claim 1, characterized in that the epoxy resin has a molecular weight of 500—5,000, preferably 800—3,000, is defunctionalized by means of monocarboxylic acids, monohydric phenols and/or monoepoxide compounds, is derived from diphenylolpropane and/or diphenylolmethane and epihalogenohydrins and, in general, still contains 0.8—1.1 epoxide groups per molecular unit.

3. A binder as claimed in claim 1 or 2, characterized in that the defunctionalized epoxy resin is additionally also modified by reaction with difunctional phenols and/or dicarboxylic acids having 4 to 10 C-atoms, preferably at 80—180°C and in the presence of catalysts.

4. A binder as claimed in one or more of claims 1 to 3, characterized in that the weight ratio of epoxy resin to resol is between 20 : 80 and 80 : 20.

5. A binder as claimed in one or more of claims 1 to 4, characterized in that the degree of substitution of all substituents of the resol component is 5 to 100, preferably 10 to 90, equivalent %, and the hydrocarbon substituents comprise alkyl radicals having 4 to 16 C-atoms and/or aralkyl radicals having 8 to 10 C-atoms and are preferably in the para position.

6. A binder as claimed in one or more of claims 1 to 5, characterized in that the amine contains more than one amine function in the molecule, and the amine is used in an amount such that the molar ratio of epoxide groups to amines is 1 : 0.1 to 1 : 1, preferably 1 : (0.35—0.9).

7. A binder as claimed in one or more of claims 1 to 6, characterized in that it is present in an aqueous form, protonized by acid, the quivalent ratio of amine groups to acids generally being 1 : (0.2 to 2), preferably 1 : (0.5—1.5).

8. A binder as claimed in one or more of claims 1 to 7, characterized in that it additionally contains other customary materials, such as pigments and fillers and, preferably, 2 to 40% by weight of resins and/or plasticizers and which has a MEQ value between 10 and 80, preferably between 15 and 45.

9. A process for the preparation of a binder as claimed in one or more of claims 1 to 8, characterized in that an epoxy resin is reacted with a resol and, before, during or after this co-condensation, withat least one amine, which contains at least one primary or secondary amino group and at most 2 hydroxyl groups, and then converted, if appropriate, with water and acid into an aqueous colloidal form.

10. The process as claimed in claim 9, characterized in that the reaction of the epoxy resin with the resol is carried out at 80 to 160°C and the amine is added at 20—140°C resol has been prepared in more than one step in such a manner that initially an oligophenol is prepared, using phenol, by reaction with formaldehyde in the initial ratio of 1 : (0.1—0.7), unreacted phenols are removed by distillation and the oligophenols are then converted into the methylol compounds in a customary manner.

11. A process for the electrophoretic deposition of a cationic resin form an aqueous dispersion onto an article connected as the cathode, characterized in that the deposition is effected from an aqueous colloidal system of a binder as claimed in claim 1.

12. Use of the binder as claimed in one or more of claims 1 to 8 in an aaqueous electrophoresis bath according to the process as claimed in claim 11, the pH value being between 3.0 and 9.0.

## Revendications

1. Liant à base de condensats mixtes de résines époxydes et de résols ainsi que d'amines, caractérisé en ce que la résine époxyde est partiellement défonctionnalisée et contient en moyenne encore 0,5 à 1,3 groupe époxyde par molécule, que le constituant résine est constitué de composés méthylolés d'oligométhylènephénols, qui peuvent en outre être substitués par des radicaux hydrocarbonés, ou hydroalkyle ou aralkyle, et que l'amine contient au moins un groupe amino primaire ou secondaire et au plus deux groupes hydroxyle.

2. Liant selon la revendication 1, caractérisé en ce que la résine époxyde possède une masse moléculaire de 500 à 5000, de préférence de 800 à 3000; est défonctionnalisée à l'aide d'acides monocarboxyliques, de monophénols et/ou de composés monoépoxydes; dérive du diphénylolpropane et/ou du diphénylolméthane et d'épihalogénhydrines; et contient en général encore 0,8—1,1 groupe époxyde par molécule.

3. Liant selon l'une des revendications 1 ou 2, caractérisé en ce que la résine époxyde défonctionnalisée est en outre modifiée par réaction sur des phénols bifonctionnels et/ou des acides dicarboxyliques à 4 à 10 atomes de carbone, de préférence à 80 à 180° C et en présence de catalyseurs.

4. Liant selon l'une ou plusieurs des revendications 1 à 3, caractérisé en ce que le rapport pondéral entre la résine époxyde et le résol est compris entre 20 : 80 et 80 : 20.

5. Liant selon l'une ou plusieurs des revendications 1 à 4, caractérisé en ce que le degré de substitution de tous les substituants du constituant résol est de 5 à 100, de préférence 10 à 90%-équivalents, et que les substituants hydrocarbonés sont constitués de radicaux alkyle à 4 à 16 atomes de carbone et/ou de radicaux aralkyle à 8 à 10 atomes de carbone et se trouvent de préférence en position para.

6. Liant selon l'une ou plusieurs des revendications 1 à 5, caractérisé en ce que l'amine contient plusieurs fonctions amines dans la molécule, et que l'amine est utilisée en une quantité telle que le rapport molaire entre les groupes époxydes et les amines soit de 1 : 0,1 à 1 : 1,1, de préférence de 1 : (0,35—0,9).

7. Liant selon l'une ou plusieurs des revendications 1 à 6, caractérisé en ce qu'il se présente sous une forme aqueuse et protonisée par un acide, le rapport équivalent entre les groupes amine et les acides étant en général de 1 : (0,2 à 2), de préférence de 1 : (0,5—1,5).

8. Liant selon l'une ou plusieurs des revendications 1 à 7, caractérisé en ce qu'il contient en outre encore d'autres substances courantes, comme des pigments et des matières de charge, et aussi, de préférence, 2 à 40% en poids de résines et/ou de plastifiants, et que la valeur méq. est comprise entre 10 et 80, de préférence entre 15 et 45.

9. Procédé de préparation d'un liant selon l'une ou plusieurs des revendications 1 à 8, caractérisé en ce qu'on fait réagir une résine époxyde sur un résol et, avant, pendant ou après cette co-condensation, sur au moins une amine contenant au moins un groupe amino primaire ou secondaire et au plus deux groupes hydroxyle, et qu'on la convertit ensuite, éventuellement avec de l'eau et un acide, pour lui donner une forme colloïdale aqueuse.

10. Procédé selon la revendication 9, caractérisé en ce que la réaction de la résine époxyde sur le résol a lieu à 80 à 160° C, de préférence à 100—130° C, et que l'amine est ajoutée à 20—140° C, de préférence à 50—120° C, tandis qu'on prépare de préférence le résol en plusieurs étapes, tout d'abord en préparant un oligophénol par l'utilisation de phénol par réaction sur du formaldéhyde selon la proportion initiale 1 : (0,1—0,7), de préférence 1 : (0,2—0,65), qu'on chasse par distillation les phénols n'ayant pas réagi et qu'on convertit ensuite les oligophénols, d'une manière habituelle, en les composés méthylolés.

11. Procédé de déposition par électrophorèse d'une résine cationique, à partir d'une dispersion aqueuse, sur une pièce montée en cathode, caractérisé en ce qu'on réalise la déposition à partir d'un système colloïdal aqueux d'un liant, selon une ou plusieurs des revendications 1 à 8.

12. Utilisation du liant selon l'une ou plusieurs des revendications 1 à 8, dans un bain aqueux d'électrophorèse selon le procédé de la revendication 11, le pH étant en général compris entre 3 et 9, de préférence entre 6 et 9.